# EUROPEAN PATENT APPLICATION

(11) **EP 4 148 836 A1**
(43) Date of publication of application: **15.03.2023**
(21) Application number: 21804427.9
(22) Date of filing: 09.04.2021
(51) Int. Cl.: H01M 4/72, H01M 4/02, H01M 10/04, H01M 6/00

(54) **POLE PIECE, WOUND-TYPE BATTERY CELL, AND BATTERY**

(30) Priority: 09.05.2020 CN 202020761606 U
(71) Applicant: BYD Company Limited, Shenzhen, Guangdong 518118 (CN)
(72) Inventor: JIANG, Xinjun, Shenzhen, Guangdong 518118 (CN); ZHANG, Jian, Shenzhen, Guangdong 518118 (CN); LEI, Lei, Shenzhen, Guangdong 518118 (CN)
(74) Representative: DehnsGermany Partnerschaft von Patentanwälten
(86) International application number: PCT/CN2021/086147
(87) International publication number: WO 2021/227729

(57) **Abstract**

An electrode sheet, a wound battery core (J) and a battery (100) are provided. The electrode sheet includes a current collector (10) and a first active material layer (11) coated on a surface of the current collector. The first active material layer is provided with a first groove (C1), and the first groove comprises a first side wall (B1), a second side wall (B2) and a third side wall (B3). The first side wall, the second side wall and the third side wall define the first groove. A vertical distance from the first side wall to the second side wall is the width of the first groove. The shape of the orthographic projection of the third side wall on the surface of the current collector is a profile of the third side wall, and the length of the profile is greater than the width of the first groove. By arranging the profile with a length that is greater than the width of the first groove, the area of the current collector at the first groove is increased, and the pressure transmitted via the active material layer to the current collector per unit area is reduced, so the current collector is less extended, and the wrinkling of the current collector is reduced.

## Description

### CROSS-REFERENCE TO RELATED APPLICATIONS

The present disclosure is proposed on the basis of and claims priority to Chinese Patent Application No. 202020761606.8 filed on May 9, 2020, which is incorporated herein by reference in its entirety.

### FIELD

The present disclosure relates to the field of batteries, and specifically to an electrode sheet, a wound battery core, and a battery.

### BACKGROUND

A battery electrode sheet includes a current collector and an active material coated on a surface of the current collector. The current collector is generally an aluminum foil or a copper foil. In the current production process of the battery electrode sheet, the electrode sheet needs to be rolled to obtain an electrode sheet that meets the design parameters. However, during the rolling process, the active material is compacted, and the active material will squeeze the foil, eventually leading to the extension of the foil. Since no extension occurs at the position where no active material layer is coated, ripples and even wrinkles in severe cases are formed in appearance at the edge of the foil due to different extensions at positions with or without the active material. Wrinkling of a groove in the electrode sheet will affect the welding strength of the tabs, causing poor welding or increasing the resistance of the battery, fast heat generation during the charge and discharge process of the battery, and accelerated attenuation of the cycle life. At positions where the groove meets the active material, the active material tends to fall off, causing a serious quality problem of foil exposure to the electrode sheet.

### SUMMARY

The present disclosure provides an electrode sheet, a wound battery core and a battery, to solve the problems of foil exposure of the battery electrode sheet, short cycle life of the battery core and fast heat generation of the battery caused by the wrinkling of the current collector during the rolling process of the electrode sheet.

To accomplish the objects of the present disclosure, the present disclosure provides the following technical solutions.

In a first aspect, the present disclosure provides an electrode sheet, which includes a current collector and a first active material layer coated on a surface of the current collector. The first active material layer is provided with a first groove, and the first active material layer includes a first side wall, a second side wall and a third side wall. The first side wall and the second side wall are arranged opposite and parallel to each other, and the third side wall connects the first side wall and the second side wall. The first side wall, the second side wall and the third side wall define the first groove. A vertical distance from the first side wall to the second side wall is the width of the first groove. The shape of the orthographic projection of the third side wall on the surface of the current collector is a profile of the third side wall, where the length of the profile is greater than the width of the first groove.

The profile is a curve or a straight line.

The profile being a curve includes a situation where the curve is an independent arc or a combination of a straight line and an arc.

When the profile is an arc with a radius that is half of the width of the first groove, the current collector is least wrinkled.

The current collector includes opposing first and second sides, where the first groove extends from the first side toward the second side. When the profile is a curve, the profile is recessed towards the second side.

The electrode sheet further includes a second active material layer, provided on a surface of the current collector facing away from the first active material layer, where the second active material layer is provided with a second groove that is the same as the first groove.

The second groove and the first groove are arranged right facing or to offset with each other.

The second groove extends from the second side toward the first side.

In a second aspect, the present disclosure further provides a wound battery core, which includes a separator and electrode sheets described in any one of the various embodiments according to the first aspect, where the separator is arranged between two electrode sheets.

In a third aspect, the present disclosure provides a battery, which includes a wound battery core as described in the second aspect.

By arranging the third side wall having a profile with a length that is greater than the width of the first groove, the perimeter of the first groove is extended, so the area of the current collector at the first groove is increased. When rolled, the stressed area of the current collector at the first groove is increased, the pressure transmitted via the active material layer to the current collector per unit area is reduced, so the current collector is less extended, and the wrinkling of the current collector is reduced.

### BRIEF DESCRIPTION OF THE DRAWINGS

To describe the technical solutions in the specific embodiments of the present disclosure or in the prior art more clearly, the following briefly describes the accompanying drawings required for describing the specific embodiments or the prior art. Apparently, the accompanying drawings in the following description show some embodiments of the present disclosure, and a person of ordinary skill in the art may still derive other drawings from these accompanying drawings without creative efforts.
Fig. 1 is a schematic structural view of a battery according to an embodiment;
Fig. 2 is a schematic structural view of a wound battery core according to an embodiment;
Fig. 3 is a schematic front structural view of an electrode sheet according to an embodiment;
Fig. 4 is a schematic bottom structural view of an electrode sheet according to an embodiment;
Fig. 5 is a schematic front structural view of an electrode sheet according to an embodiment;
Fig. 6 is a schematic front structural view of an electrode sheet according to an embodiment;
Fig. 7 is a schematic front structural view of an electrode sheet according to an embodiment;
Fig. 8 is a schematic front structural view of an electrode sheet according to an embodiment;
Fig. 9 is a schematic bottom structural view of an electrode sheet according to an embodiment; and
Fig. 10 is a schematic structural view of a battery according to an embodiment.

### Reference numerals:

100 battery, K battery housing, J wound battery core, G battery upper cover, D electrolyte injection port, T1 boss, T2 cylindrical boss, 1/2 electrode sheet, 3 separator, 10 current collector, the first active material layer 11 mainly includes 12 second active material layer, C1 first groove, C2 second groove, B1 first side wall, B2 second side wall, B3 third side wall, L1 profile of the third side wall of the first groove, L2 profile of the third side wall of the second groove, 4 width of the first groove C1, 5 first side, 6 second side.

### DETAILED DESCRIPTION

The following clearly and completely describes the technical solutions in the implementations of the present disclosure with reference to the accompanying drawings in the implementations of the present disclosure. Apparently, the described embodiments are merely some but not all of the implementations of the present disclosure. All other embodiments obtained by a person of ordinary skill in the art based on the implementations of the present disclosure without creative efforts shall fall within the protection scope of the present disclosure.

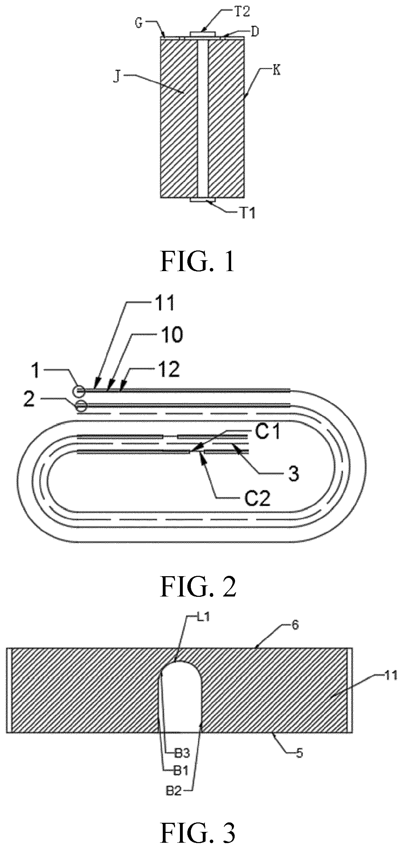

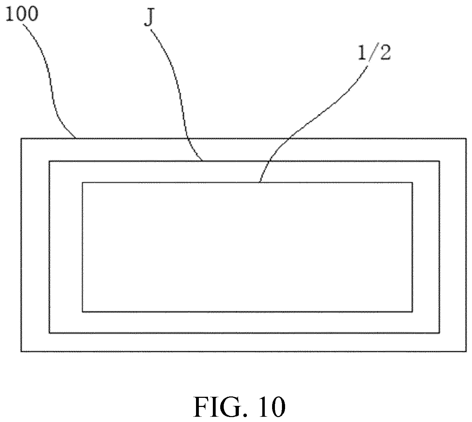

Referring to Figs. 1 and 10, an embodiment of the present disclosure provides a battery 100. The battery 100 includes a battery casing K, a wound battery core J accommodated in the battery casing K and a battery upper cover G. The wound battery core J is one provided in the embodiment of the present disclosure, and the specific structure will be described later. The battery casing K can be a cylinder with an open upper end, the inner wall at bottom of the cylinder is electrically connected to a negative electrode current collection sheet of the wound battery core J, a boss T1 is provided at a central position of an outer bottom, and to connect a negative electrode of the battery to an external device. The battery upper cover G is a disc-shaped cover that matches the battery casing K, and has a bottom provided with a downwardly protruding plane that is electrically connected to a positive electrode current collection sheet. An insulating sealing ring is mounted between the positive electrode current collection sheet and the battery casing K. A cylindrical boss T2 protruding upward is provided at a central position on a top of the battery upper cover G, to connect a positive electrode of the battery to an external device. The battery upper cover G is provided with an electrolyte injection port D. The transmission of electrons between the positive and negative electrodes is achieved by injecting an electrolyte. After the electrolyte is injected, the electrolyte injection port is sealed with a sealing pin. The battery 100 with such a structure has less heat generation during the charge and discharge process, and low attenuation rate during cycles, allowing the battery 100 to have a long service life. By using the wound battery core J provided in the present disclosure, the wrinkling of the electrode sheet is reduced or even no wrinkling occurs. This reduces the resistance of the battery 100, enables low heat generation of the battery 100, reduces the occurrence of exposed current collector caused by the falling off of the active material layer from the electrode sheet, and extends the service life of the battery 100.

Referring to Fig. 2, an embodiment of the present disclosure provides a wound battery core J. The wound battery core J includes a separator 3 and an electrode sheet 1 and an electrode sheet 2 provided in an embodiment of the present disclosure. The electrode sheet 1 and the electrode sheet 2 can be a positive electrode sheet and a negative electrode sheet. The separator 3 is usually a polymer material with nano-scale pores, and provided between the electrode sheet 1 and the electrode sheet 2 to separate the two electrode sheets from each other, so as to avoid the short circuit problem caused by the contact between the positive and negative electrodes, and permit the electrolyte ions to pass through. The electrode sheet 1, the separator 3 and the electrode sheet 2 are stacked, and then wound by a special winding machine into the wound battery core J. By using the electrode sheet provided in the present disclosure, the wrinkling of the electrode sheet is reduced or even no wrinkling occurs. As a result, the falling off of the active material layer from the electrode sheet is reduced, and the service life of the battery core is extended.

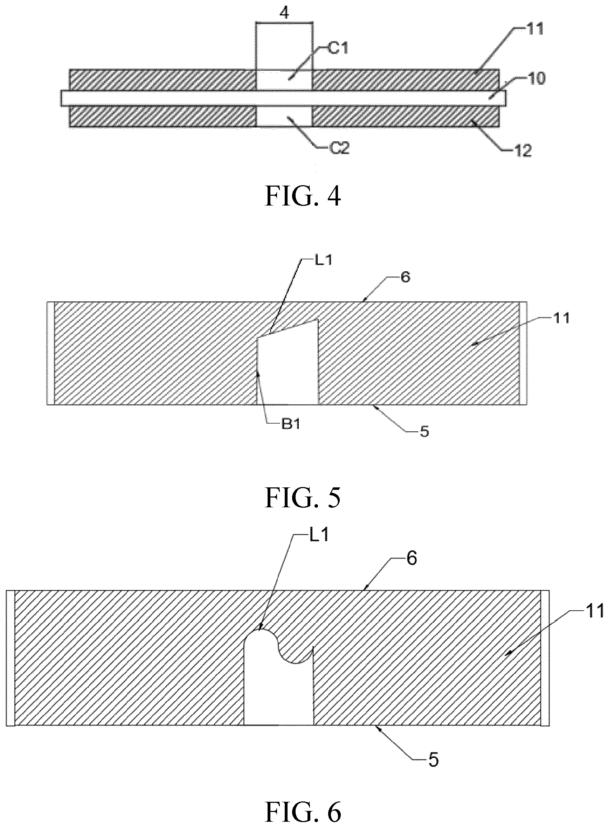

Referring to Figs. 3 and 4, the present disclosure provides an electrode sheet, which includes a current collector 10 and a first active material layer 11 coated on a surface of the current collector 10. The first active material layer 11 is provided with a first groove C1, and the first groove C1 includes a first side wall B1, a second side wall B2 and a third side wall B3. The first side wall B1 and the second side wall B2 are arranged opposite and parallel to each other, and the third side wall B3 connects the first side wall B1 and the second side wall B2. The first side wall B1, the second side wall B2 and the third side wall B3 define the first groove C1. A vertical distance from the first side wall B1 to the second side wall B2 is the width 4 of the first groove C1. The shape of the orthographic projection of the third side wall B3 on the surface of the current collector 10 is a profile L1 of the third side wall B3, where the length of the profile L1 is greater than the width 4 of the first groove C1.

By arranging the third side wall B3 having a profile L1 with a length that is greater than the width of the first groove C1, the perimeter of the first groove C1 is extended, so the area of the current collector 10 at the first groove C1 is increased. When rolled, the stressed area of the current collector 10 at the first groove C1 is increased, the pressure transmitted via the first active material layer 11 to the current collector 10 per unit area is reduced, so the current collector 10 is less extended, and the wrinkling of the current collector 10 is reduced.

In an embodiment, referring to Figs. 3, and 5 to 8, the profile L1 of the third side wall B3 is a curve or a straight line. By arranging the profile L1 as a curve or a straight line, the stressed area of the current collector 10 is increased, so the pressure applied on the current collector 10 per unit area is reduced, thereby further reducing the extension of the current collector 10.

In an embodiment, referring to Fig. 5, if the profile L1 of the third side wall B3 is a straight line, the straight line is not perpendicular to the first side wall B1 and the second side wall B2, and but inclined at an angle.

In an embodiment, referring to Fig. 3, the profile L1 of the third side wall B3 being a curve includes a situation where the profile L1 of the third side wall B3 is an independent arc. According to some embodiments of the present disclosure, the profile L1 is an arc with a radius that is half of the width 4 of the first groove C 1. In this case, the perimeter of the first groove C1 is the longest, the stressed area of the current collector 10 at the first groove C1 is the largest, and the current collector 10 is least wrinkled. In other embodiments, the radius of the ac may also be larger or less than half of the width 4 of the first groove C1.

In another embodiment, referring to Fig. 6, the profile L1 of the third side wall B3 being a curve includes a situation where the profile L1 of the third side wall B3 is an S-shaped curve. The S-shaped curve consists of two semicircular arcs with the same diameter, and the diameter of the two semicircular arc is half of the width of the first groove C1.

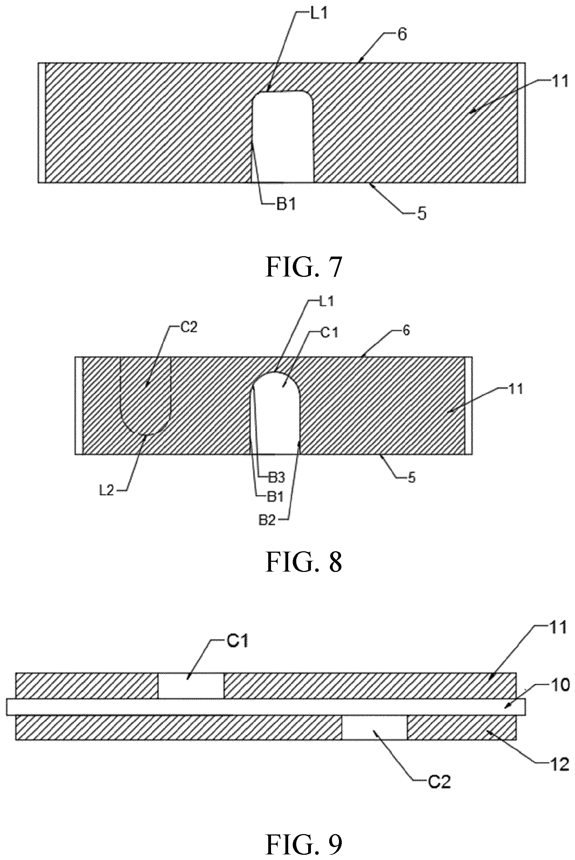

In another embodiment, referring to Fig. 7, the profile L1 of the third side wall B3 being a curve includes a situation where the profile L1 of the third side wall B3 is a combination of an arc and a straight line. The arc can be a quarter arc, a semicircular arc or the like, and the straight line can be perpendicular or inclined to the first side wall B 1. In other embodiments, the profile L1 of the third side wall B3 being a curve also includes a free-form curve of any shape.

In an embodiment, referring to Figs. 3 and 4, the current collector 10 includes opposing first side 5 and second side 6, and the first groove C1 and a second groove C2 extend from the first side 5 toward the second side 6. The profile L1 of the first groove C1 is a curve and the profile L1 of the first groove C1 is recessed from the first side 5 toward the second side 6. The second groove C2 has the same structure with the first groove C1.

In an embodiment, referring to Figs. 8 and 9, the current collector 10 includes opposing first side 5 and second side 6, and the electrode sheet further includes a second active material layer 12. The second active material layer 12 is provided on a surface of the current collector 10 facing away from first active material layer 11, where the second active material layer12 is provided with a second groove C2 that is the same as the first groove C1.

In an embodiment, referring to Fig. 8, the profile L1 of the first groove C1 extends from the first side 5 toward the second side 6; and the profile L1 of the third side wall B3 of the first groove C1 is recessed from the first side 5 toward the second side 6. The second groove C2 extends from the second side 6 toward the first side 5, and The profile L2 of the third side wall of the second groove C2 extends from the second side 6 toward the first side 5.

In an embodiment, referring to Figs. 3 and 4, the first groove C1 and the second groove C2 are arranged facing right to each other.

In an embodiment, referring to Figs. 8 and 9, the first buffer portion C1 and the second buffer portion C2 are arranged to offset with each other.

The foregoing descriptions are merely preferred embodiments of the present invention, and are not intended to limit the scope of the present disclosure. A person of ordinary skill in the art may understand all or some processes of the foregoing embodiments, and equivalent modifications made according to the claims of the present disclosure shall still fall within the scope of the present disclosure.

## Claims

1. An electrode sheet, comprising a current collector and a first active material layer coated on a surface of the current collector, wherein the first active material layer is provided with a first groove, and the first groove comprises a first side wall, a second side wall and a third side wall, wherein the first side wall and the second side wall are arranged opposite and parallel to each other, the third side wall connects the first side wall and the second side wall, the first side wall, the second side wall and the third side wall define the first groove, a vertical distance from the first side wall to the second side wall is the width of the first groove, the shape of the orthographic projection of the third side wall on the surface of the current collector is a profile of the third side wall, and the length of the profile is greater than the width of the first groove.

2. The electrode sheet according to claim 1, wherein the profile is a curve or a straight line.

3. The electrode sheet according to claim 2, wherein the profile being a curve comprises a situation where the curve is an independent arc or a combination of a straight line and an arc.

4. The electrode sheet according to claim 3, wherein when the profile is an arc, the radius of the arc is half of the width of the first groove.

5. The electrode sheet according to claim 2, wherein the current collector comprises opposing first and second sides, and the first groove extends from the first side toward the second side; and when the profile is a curve, the profile is recessed towards the second side.

6. The electrode sheet according to claim 5, further comprising a second active material layer, provided on a surface of the current collector facing away from the first active material layer, wherein the second active material layer is provided with a second groove that is the same as the first groove.

7. The electrode sheet according to claim 6, wherein the second groove and the first groove are arranged right facing or to offset with each other.

8. The electrode sheet according to claim 6 or 7, wherein the second groove extends from the second side toward the first side.

9. A wound battery core, comprising a separator and an electrode sheet according to any one of claims 1 to 8, wherein the separator is arranged between two electrode sheets.

10. A battery, comprising a wound battery core according to claim 9.
